(19) Europäisches Patentamt
European Patent Office
Office européen des brevets

(11) EP 3 517 569 A1

(12) EUROPEAN PATENT APPLICATION
published in accordance with Art. 153(4) EPC

(43) Date of publication:
**31.07.2019 Bulletin 2019/31**

(21) Application number: **17853151.3**

(22) Date of filing: **21.09.2017**

(51) Int Cl.:
***C08L 15/00*** *(2006.01)* ***B60C 1/00*** *(2006.01)*
***C08K 7/26*** *(2006.01)* ***C08L 7/00*** *(2006.01)*
***C08L 57/02*** *(2006.01)* ***C08L 65/00*** *(2006.01)*

(86) International application number:
**PCT/JP2017/034174**

(87) International publication number:
**WO 2018/056383 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.09.2016 JP 2016187623**

(71) Applicant: **Bridgestone Corporation**
**Tokyo 104-8340 (JP)**

(72) Inventors:
- **OGASAWARA Takuya**
  **Tokyo 104-8340 (JP)**
- **TSUJI Takanori**
  **Tokyo 104-8340 (JP)**

(74) Representative: **Oxley, Robin John George**
**Marks & Clerk LLP**
**15 Fetter Lane**
**London EC4A 1BW (GB)**

(54) **RUBBER COMPOSITION, AND TIRE**

(57) The present disclosure provides a rubber composition that can improve the steering stability and the wet performance of a tire while reducing the rolling resistance of the tire. The rubber composition includes a rubber component (A) including a natural rubber (A1) and a modified diene rubber (A2) having a glass transition temperature (Tg) of -50°C or lower, a thermoplastic resin (B), and a silica (C) such that the specific surface area by cetyltrimethylammonium bromide adsorption (CTAB) ($m^2/g$) and the ink bottle-shaped micropore index (IB) satisfy IB ≤ -0.36 × CTAB + 86.8 (Expression Y). The amount of the thermoplastic resin (B) is 10 to 50 parts by mass per 100 parts by mass of the rubber component (A).

FIG. 1

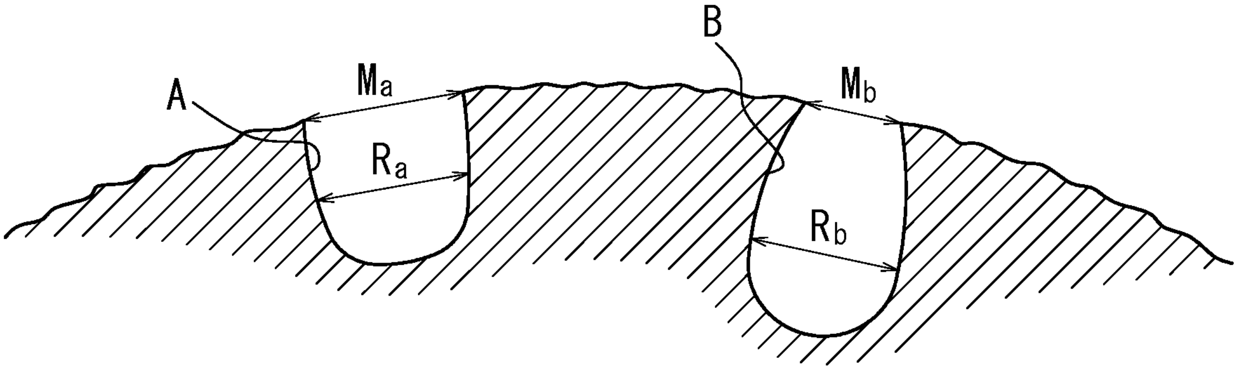


EP 3 517 569 A1

## Description

TECHNICAL FIELD

The present disclosure relates to a rubber composition and a tire.

BACKGROUND

A demand for vehicles with lower fuel consumption is now growing with the global movement towards reduction in carbon dioxide emissions as a result of increased interest in environmental issues. To respond to such a demand, lower rolling resistance is also required of tires. When developing a rubber composition for a tire tread to improve the rolling resistance of the tire, it is typically effective to consider the loss tangent (tanδ) near 60°C as an index, since the tire temperature is normally near 60°C during running. Specifically, using a rubber composition with a low tanδ near 60°C in the tread rubber can suppress heat buildup in the tire to reduce the rolling resistance, thereby improving the fuel efficiency of the tire, as in Patent Literature (PTL) 1.

From the standpoint of improving automobile driving safety, it is also important to ensure gripping performance on wet road surfaces (wet performance). Along with reduced rolling resistance, tires are therefore also required to have improved wet performance. With regard to this point, PTL 2 discloses a technique for improving the wet performance by setting tanδ at 0°C to 0.95 or more in a rubber composition for tire treads.

CITATION LIST

Patent Literature

PTL 1: JP 2012-92179 A
PTL 2: JP 2014-9324 A

SUMMARY

(Technical Problem)

A rubber composition with a high tanδ at 0°C, however, also has a high tanδ at 60°C, which is related to the rolling resistance of a tire. Hence, simply using a rubber composition with a high tanδ at 0°C in the tread rubber to improve the wet performance of the tire ends up increasing the rolling resistance of the tire. Conversely, a rubber composition with a low tanδ at 60°C also has a low tanδ at 0°C, which is related to the wet performance of the tire. Hence, simply using a rubber composition with a low tanδ at 60°C in the tread rubber to improve the rolling resistance of the tire ends up degrading the wet performance of the tire. It has thus been difficult to reduce the rolling resistance of a tire while also improving the wet performance.

To address this, we considered increasing deformation of the tread rubber to improve the gripping force relative to wet road surfaces, thereby improving the wet performance. We discovered, however, that simply making the tread rubber softer to increase deformation of the tread rubber leads to a decrease in steering stability of the tire.

To resolve this problem occurring with conventional techniques, the present disclosure provides a rubber composition that can improve the steering stability and the wet performance of a tire while reducing the rolling resistance of the tire.

The present disclosure also provides a tire that has low rolling resistance, excellent steering stability, and excellent wet performance.

(Solution to Problem)

The main features of the present disclosure for resolving the above problem are as follows.

A rubber composition of the present disclosure includes a rubber component (A) comprising a natural rubber (A1) and a modified diene rubber (A2) having a glass transition temperature (Tg) of -50°C or lower;
a thermoplastic resin (B); and
a silica (C) such that a specific surface area by cetyltrimethylammonium bromide adsorption (CTAB) ($m^2/g$) and an ink bottle-shaped micropore index (IB) satisfy Expression (Y),

$$IB \leq -0.36 \times CTAB + 86.8 \cdots (Y);$$

wherein the ink bottle-shaped micropore index (IB) in Expression (Y) is calculated by Expression (Z),

$$IB = M2 - M1 \cdots (Z);$$

wherein in Expression (Z), M1 represents a diameter in nanometers of an opening exhibiting a maximum mercury charge rate when pressure is raised from 1 PSI to 32000 PSI in a measurement, according to a mercury press-in method using a mercury porosimeter, of silica including micropores having openings with diameters in a range of $1.2 \times 10^5$ nm to 6 nm on an outer surface of the silica, and M2 represents a diameter in nanometers of an opening exhibiting a maximum mercury discharge rate when pressure is lowered from 32000 PSI to 1 PSI in the measurement; and
wherein the amount of the thermoplastic resin (B) is 10 to 50 parts by mass per 100 parts by mass of the rubber component (A).

Using the rubber composition of the present disclosure in the tread rubber of a tire can improve the steering stability and the wet performance of the tire while reducing the rolling resistance of the tire.

In the present disclosure, the glass transition temperature (Tg) of the modified diene rubber (A2) can be measured by a temperature dispersion curve of tanδ and can, for example, be measured under the condition of a sweep rate of 5°C/min to 10°C/min using a differential scanning calorimeter produced by TA Instruments.

In the rubber composition of the present disclosure, the specific surface area by cetyltrimethylammonium bromide adsorption (CTAB) of the silica (C) is preferably 150 $m^2/g$ or more, and the amount of the silica (C) is preferably 50 to 75 parts by mass per 100 parts by mass of the rubber component (A). In this case, the processability of the rubber composition is good, and the steering stability of a tire in which the rubber composition is used can be further improved.

In the rubber composition of the present disclosure, the thermoplastic resin (B) is preferably at least one selected from the group consisting of $C_5/C_9$-based resins, $C_5$-based resins, $C_9$-based resins, and dicyclopentadiene resins. In this case, using the rubber composition in the tread rubber of a tire can further improve the wet performance of the tire.

The rubber composition of the present disclosure preferably has a storage modulus at 0°C under 4% strain ($E'_{0°C,\ 4\%}$) of 16.7 MPa or less. In this case, using the rubber composition in the tread of a tire can further improve the wet performance of the tire.

In a tire of the present disclosure, the aforementioned rubber composition is used in tread rubber of the tire. Since the aforementioned rubber composition is used in the tread rubber of the tire of the present disclosure, the tire has low rolling resistance, excellent steering stability, and excellent wet performance.

(Advantageous Effect)

The present disclosure can provide a rubber composition that can improve the steering stability and wet performance of a tire while reducing the rolling resistance of the tire.

The present disclosure can also provide a tire that has low rolling resistance, excellent steering stability, and excellent wet performance.

BRIEF DESCRIPTION OF THE DRAWINGS

In the accompanying drawings:

FIG. 1 is an inner core direction cross-sectional outline (partially enlarged view) of a silica particle; and
FIG. 2 is an outline of mercury charge and discharge curves of silica, measured according to a mercury press-in method using a mercury porosimeter, where the vertical axis represents the differential mercury charge rate (-dV/d(log d)) on the mercury charge curve C and the differential mercury discharge rate (-dV/d(log d)) on the mercury discharge curve D, V represents the amount of charged mercury (cc) on the mercury charge curve C and the amount of discharged mercury (cc) on the mercury discharge curve D, and the horizontal axis represents d (nm), which is the diameter (nm) of the opening of a micropore of the silica.

DETAILED DESCRIPTION

The rubber composition and tire of the present disclosure are described below in detail with reference to embodiments thereof.

<Rubber Composition>

The rubber composition of the present disclosure includes a rubber component (A) including a natural rubber (A1) and a modified diene rubber (A2) having a glass transition temperature (Tg) of -50°C or lower;
a thermoplastic resin (B); and
a silica (C) such that a specific surface area by cetyltrimethylammonium bromide adsorption (CTAB) ($m^2/g$) and an ink bottle-shaped micropore index (IB) satisfy Expression (Y),

$$IB \leq -0.36 \times CTAB + 86.8 \cdots (Y);$$

wherein the ink bottle-shaped micropore index (IB) in Expression (Y) is calculated by Expression (Z),

$$IB = M2 - M1 \cdots (Z);$$

wherein in Expression (Z), M1 represents a diameter in nanometers of an opening exhibiting a maximum mercury charge rate when pressure is raised from 1 PSI to 32000 PSI in a measurement, according to a mercury press-in method using a mercury porosimeter, of silica including micropores having openings with diameters in a range of $1.2 \times 10^5$ nm to 6 nm on an outer surface of the silica, and M2 represents a diameter in nanometers of an opening exhibiting a maximum mercury discharge rate when pressure is lowered from 32000 PSI to 1 PSI in the measurement; and
wherein an amount of the thermoplastic resin (B) is 10 to 50 parts by mass per 100 parts by mass of the rubber component (A).

Since the rubber composition of the present disclosure includes the modified diene rubber (A2) having a glass transition temperature (Tg) of -50°C or lower as the rubber component (A), the dispersibility of filler typically blended into the rubber composition increases. Use of this rubber composition in the tread rubber of a tire can improve the wet performance while reducing the rolling resistance of the tire.

Since the rubber composition of the present disclosure includes the natural rubber (A1) as the rubber component (A), tanδ is reduced. The rolling resistance of a tire in which this rubber composition is used can therefore be further reduced.

Furthermore, the addition of the thermoplastic resin (B) to the rubber composition of the present disclosure can increase the elastic modulus in the low-strain region while decreasing the elastic modulus in the high-strain region. Therefore, using the rubber composition of the present disclosure in the tread rubber of a tire can ensure the rigidity necessary for steering stability during driving while increasing the deformation volume of the tread rubber near the contact patch with the road surface, where strain is large during driving.

The friction coefficient (μ) on wet road surfaces is proportional to the product of the rigidity of the tread rubber overall, the amount of deformation of the tread rubber, and tanδ (loss tangent). Hence, even if tanδ is reduced by use of the rubber component (A) in a tire having tread rubber to which the rubber composition of the present disclosure is applied, the use of the thermoplastic resin (B) can increase the amount of deformation of the tread rubber while ensuring the rigidity of the tread rubber overall. The friction coefficient (μ) on wet road surfaces can therefore be sufficiently increased, which further improves the wet performance.

The addition of the silica (C) to the rubber composition of the present disclosure can improve the storage modulus while suppressing a rise in tanδ (loss tangent). Therefore, use of the rubber composition of the present disclosure in tread rubber can ensure the tread hardness of the tire while suppressing an increase in the rolling resistance of the tire. This can improve the steering stability of the tire.

Accordingly, using the rubber composition of the present disclosure in the tread rubber of a tire can improve the steering stability and the wet performance of the tire while reducing the rolling resistance of the tire.

The rubber component (A) includes natural rubber (NR) (A1). The ratio of the natural rubber (A1) in the rubber component (A) is preferably 30 mass% or more, more preferably 40 mass% or more, and is preferably 60 mass% or less, more preferably 50 mass% or less. Setting the ratio of natural rubber (A1) in the rubber component (A) to 30 mass% or more can lower tanδ, in particular tanδ at 0°C, and can further reduce the rolling resistance at low temperatures in a tire in which the rubber composition is used. Furthermore, setting the ratio of natural rubber (A1) in the rubber component (A) to 60 mass% or less can increase the ratio of the modified diene rubber (A2), described below, that has a glass transition temperature (Tg) of -50°C or lower.

The rubber component (A) further includes a modified diene rubber (A2) that has a glass transition temperature (Tg) of -50°C or lower (modified diene rubber (A2)). The ratio of the modified diene rubber (A2) in the rubber component (A) is preferably 40 mass% or more, more preferably 50 mass% or more, and is preferably 70 mass% or less, more

preferably 60 mass% or less. When the ratio of the modified diene rubber (A2) in the rubber component (A) is 40 mass% or more, the dispersibility of filler in the rubber composition increases. Use of this rubber composition in the tread rubber of a tire can improve the wet performance while further reducing the rolling resistance of the tire. When the ratio of the modified diene rubber (A2) in the rubber component (A) is 70 mass% or less, the ratio of the above-described natural rubber (A1) can be increased.

The effect of increasing the dispersibility of filler in the rubber composition is small in a modified diene rubber with a glass transition temperature (Tg) exceeding -50°C. The glass transition temperature (Tg) of the modified diene rubber (A2) is preferably -55°C or lower, more preferably -60°C or lower, and is preferably -120°C or higher, more preferably -100°C or higher.

Examples of a modified functional group in the modified diene rubber (A2) include a nitrogen-containing functional group, a silicon-containing functional group, and an oxygen-containing functional group.

Examples of the modified diene rubber (A2) include a polymer obtained by using a conjugated diene compound as a monomer, or a conjugated diene compound and an aromatic vinyl compound as monomers, and modifying, with a modifying agent, the molecular terminal and/or main chain of a polymer or copolymer of the conjugated diene compound or a copolymer of the conjugated diene compound and the aromatic vinyl compound; and a polymer obtained by using a conjugated diene compound as a monomer, or a conjugated diene compound and an aromatic vinyl compound as monomers, and utilizing a polymerization initiator having a modified functional group to polymerize or copolymerize the monomer or monomers.

Regarding the monomers used to synthesize the modified diene rubber (A2), examples of the conjugated diene compound include 1,3-butadiene, isoprene, 1,3-pentadiene, 2,3-dimethylbutadiene, 2-phenyl-1,3-butadiene, and 1,3-hexadiene, and examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene.

Examples of the modified diene rubber (A2) include modified synthetic isoprene rubber (IR), modified polybutadiene rubber (BR), modified styrene-butadiene copolymer rubber (SBR), and modified styrene-isoprene copolymer rubber (SIR).

The modifying agent is preferably a hydrocarbyloxy silane compound.

A compound represented by the following General Formula (I) is preferable as the hydrocarbyloxy silane compound.

$$R^1_a\text{-Si-}(OR^2)_{4-a} \cdots \qquad (I)$$

In General Formula (I), $R^1$ and $R^2$ each independently represent a $C_{1-20}$ monovalent aliphatic hydrocarbon group or a $C_{6-18}$ monovalent aromatic hydrocarbon group; "a" represents an integer from 0 to 2; when a plurality of $OR^2$s are present, each $OR^2$ may be the same or different; and the molecule does not include active protons.

A compound represented by the following General Formula (II) is also preferable as the hydrocarbyloxy silane compound.

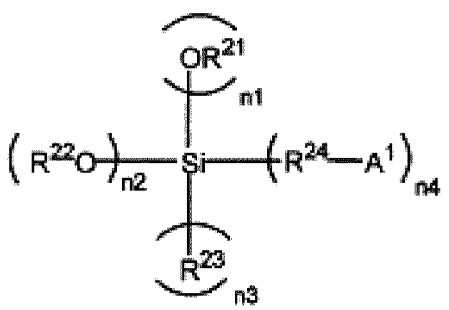

· · · (II)

In General Formula (II), n1 + n2 + n3 + n4 is 4 (where n2 is an integer from 1 to 4 and n1, n3, and n4 are integers from 0 to 3); $A^1$ represents at least one kind of functional group selected from the group consisting of a saturated cyclic tertiary amine compound residual group, an unsaturated cyclic tertiary amine compound residual group, a ketimine residual group, a nitrile group, an isocyanate group, a thioisocyanate group, an epoxy group, a thioepoxy group, an isocyanuric acid trihydrocarbyl ester group, a carbonic acid dihydrocarbyl ester group, a pyridine group, a ketone group, a thioketone group, an aldehyde group, a thioaldehyde group, an amide group, a carboxylic acid ester group, a thiocarboxylic acid ester group, a metal salt of carboxylic acid ester, a metal salt of thiocarboxylic acid ester, a carboxylic acid anhydride residual group, a carboxylic acid halogen compound residual group, and a primary or secondary amino group having a hydrolyzable group or a mercapto group having a hydrolyzable group; when n4 is 2 or more, each $A^1$ may be the same or different; $A^1$ may be a divalent group that bonds with Si to form a cyclic structure; $R^{21}$ represents a $C_{1-20}$

monovalent aliphatic or cycloaliphatic hydrocarbon group or a $C_{6-18}$ monovalent aromatic hydrocarbon group; when n1 is 2 or more, each $R^{21}$ may be the same or different; $R^{23}$ represents a $C_{1-20}$ monovalent aliphatic or cycloaliphatic hydrocarbon group, a $C_{6-18}$ monovalent aromatic hydrocarbon group, or a halogen atom; when n3 is 2 or more, each $R^{23}$ may be the same or different; $R^{22}$ represents a $C_{1-20}$ monovalent aliphatic or cycloaliphatic hydrocarbon group or a $C_{6-18}$ monovalent aromatic hydrocarbon group, either of which may contain a nitrogen atom and/or a silicon atom; when n2 is 2 or more, each $R^{22}$ may be the same or different or may combine to form a ring; $R^{24}$ represents a $C_{1-20}$ divalent aliphatic or cycloaliphatic hydrocarbon group or a $C_{6-18}$ divalent aromatic hydrocarbon group; and when n4 is 2 or more, each $R^{24}$ may be the same or different. A trimethylsilyl group or tert-butyldimethylsilyl group is preferable, and a trimethylsilyl group is particularly preferable, as the hydrolyzable group in the primary or secondary amino group having a hydrolyzable group or the mercapto group having a hydrolyzable group.

A compound represented by the following General Formula (III) is preferable as the compound represented by General Formula (II).

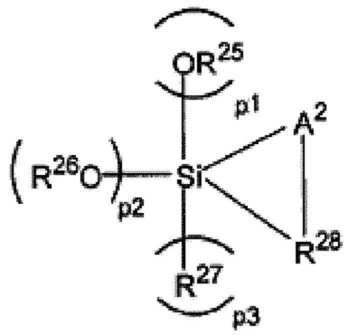

· · · (III)

In General Formula (III), p1 + p2 + p3 is 2 (where p2 is an integer from 1 to 2, and p1 and p3 are integers from 0 to 1); $A^2$ represents NRa (where Ra represents a monovalent hydrocarbon group, a hydrolyzable group, or a nitrogen-containing organic group) or sulfur; $R^{25}$ represents a $C_{1-20}$ monovalent aliphatic or cycloaliphatic hydrocarbon group or a $C_{6-18}$ monovalent aromatic hydrocarbon group; $R^{27}$ represents a $C_{1-20}$ monovalent aliphatic or cycloaliphatic hydrocarbon group, a $C_{6-18}$ monovalent aromatic hydrocarbon group, or a halogen atom; $R^{26}$ represents a $C_{1-20}$ monovalent aliphatic or cycloaliphatic hydrocarbon group, a $C_{6-18}$ monovalent aromatic hydrocarbon group, or a nitrogen-containing organic group, any of which may contain a nitrogen atom and/or a silicon atom; when p2 is 2, each $R^{26}$ may be the same or different or may combine to form a ring; and $R^{28}$ represents a $C_{1-20}$ divalent aliphatic or cycloaliphatic hydrocarbon group or a $C_{6-18}$ divalent aromatic hydrocarbon group. A trimethylsilyl group or tert-butyldimethylsilyl group is preferable as the hydrolyzable group, and a trimethylsilyl group is particularly preferable.

A compound represented by the following General Formula (IV) is also preferable as the compound represented by General Formula (II).

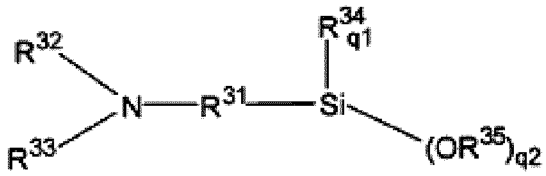

· · · (IV)

In General Formula (IV), q1 + q2 is 3 (where q1 is an integer from 0 to 2, and q2 is an integer from 1 to 3); $R^{31}$ represents a $C_{1-20}$ divalent aliphatic or cycloaliphatic hydrocarbon group or a $C_{6-18}$ divalent aromatic hydrocarbon group; $R^{32}$ and $R^{33}$ each independently represent a hydrolyzable group, a $C_{1-20}$ monovalent aliphatic or cycloaliphatic hydrocarbon group, or a $C_{6-18}$ monovalent aromatic hydrocarbon group; $R^{34}$ represents a $C_{1-20}$ monovalent aliphatic or cycloaliphatic hydrocarbon group or a $C_{6-18}$ monovalent aromatic hydrocarbon group; when q1 is 2, each $R^{34}$ may be the same or different; $R^{35}$ represents a $C_{1-20}$ monovalent aliphatic or cycloaliphatic hydrocarbon group or a $C_{6-18}$ monovalent aromatic hydrocarbon group; and when q2 is 2 or more, each $R^{35}$ may be the same or different. A trimethylsilyl group or tert-butyldimethylsilyl group is preferable as the hydrolyzable group, and a trimethylsilyl group is particularly preferable.

A compound represented by the following General Formula (V) is also preferable as the compound represented by General Formula (II).

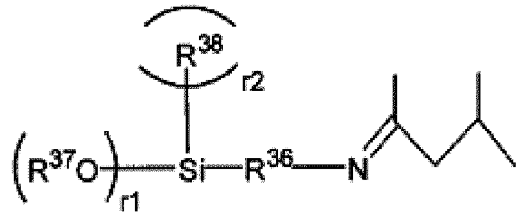

. . . (V)

In General Formula (V), r1 + r2 is 3 (where r1 is an integer from 1 to 3, and r2 is an integer from 0 to 2); $R^{36}$ represents a $C_{1-20}$ divalent aliphatic or cycloaliphatic hydrocarbon group or a $C_{6-18}$ divalent aromatic hydrocarbon group; $R^{37}$ represents a dimethylaminomethyl, dimethylaminoethyl, diethylaminomethyl, diethylaminoethyl, methylsilyl(methyl)aminomethyl, methylsilyl(methyl)aminoethyl, methylsilyl(ethyl)aminomethyl, methylsilyl(ethyl)aminoethyl, dimethylsilylaminomethyl, or dimethylsilylaminoethyl group, a $C_{1-20}$ monovalent aliphatic or cycloaliphatic hydrocarbon group, or a $C_{6-18}$ monovalent aromatic hydrocarbon group; when r1 is 2 or more, each $R^{37}$ may be the same or different; $R^{38}$ represents a $C_{1-20}$ hydrocarbyloxy group, a $C_{1-20}$ monovalent aliphatic or cycloaliphatic hydrocarbon group, or a $C_{6-18}$ monovalent aromatic hydrocarbon group; and when r2 is 2, each $R^{38}$ may be the same or different.

A compound represented by the following General Formula (VI) is also preferable as the compound represented by General Formula (II).

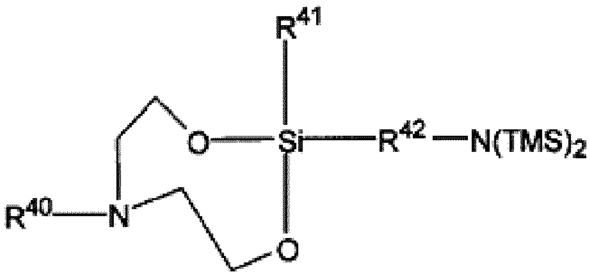

. . . (VI)

In General Formula (VI), $R^{40}$ represents a trimethylsilyl group, a $C_{1-20}$ monovalent aliphatic or cycloaliphatic hydrocarbon group, or a $C_{6-18}$ monovalent aromatic hydrocarbon group; $R^{41}$ represents a $C_{1-20}$ hydrocarbyloxy group, a $C_{1-20}$ monovalent aliphatic or cycloaliphatic hydrocarbon group, or a $C_{6-18}$ monovalent aromatic hydrocarbon group; and $R^{42}$ represents a $C_{1-20}$ divalent aliphatic or cycloaliphatic hydrocarbon group or a $C_{6-18}$ divalent aromatic hydrocarbon group. Here, TMS indicates a trimethylsilyl group (the same holds below).

A compound represented by the following General Formula (VII) is also preferable as the compound represented by General Formula (II).

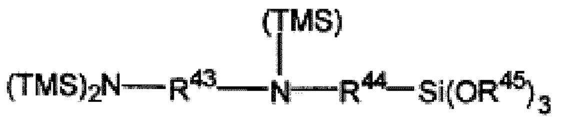

. . . (VII)

In General Formula (VII), $R^{43}$ and $R^{44}$ each independently represent a $C_{1-20}$ divalent aliphatic or cycloaliphatic hydrocarbon group, or a $C_{6-18}$ divalent aromatic hydrocarbon group; $R^{45}$ represents a $C_{1-20}$ monovalent aliphatic or cycloaliphatic hydrocarbon group or a $C_{6-18}$ monovalent aromatic hydrocarbon group; and each $R^{45}$ may be the same or different.

A compound represented by the following General Formula (VIII) is also preferable as the compound represented by General Formula (II).

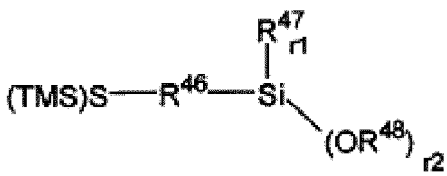

. . . (VIII)

In General Formula (VIII), r1 + r2 is 3 (where r1 is an integer from 0 to 2, and r2 is an integer from 1 to 3); $R^{46}$ represents a $C_{1-20}$ divalent aliphatic or cycloaliphatic hydrocarbon group or a $C_{6-18}$ divalent aromatic hydrocarbon group;

and $R^{47}$ and $R^{48}$ each independently represent a $C_{1-20}$ monovalent aliphatic or cycloaliphatic hydrocarbon group or a $C_{6-18}$ monovalent aromatic hydrocarbon group. A plurality of $R^{47}$s or $R^{48}$s may be the same or different.

A compound represented by the following General Formula (IX) is also preferable as the compound represented by General Formula (II).

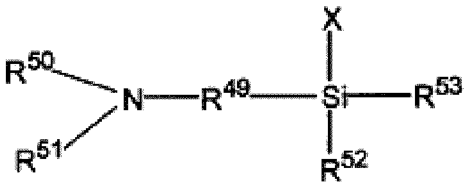

· · · (IX)

In general formula (IX), X represents a halogen atom; $R^{49}$ represents a $C_{1-20}$ divalent aliphatic or cycloaliphatic hydrocarbon group, or a $C_{6-18}$ divalent aromatic hydrocarbon group; $R^{50}$ and $R^{51}$ each independently represent a hydrolyzable group, a $C_{1-20}$ monovalent aliphatic or cycloaliphatic hydrocarbon group, or a $C_{6-18}$ monovalent aromatic hydrocarbon group; alternatively, $R^{50}$ and $R^{51}$ may bond to form a divalent organic group; and $R^{52}$ and $R^{53}$ each independently represent a halogen atom, a hydrocarbyloxy group, a $C_{1-20}$ monovalent aliphatic or cycloaliphatic hydrocarbon group, or a $C_{6-18}$ monovalent aromatic hydrocarbon group. A hydrolyzable group is preferable as $R^{50}$ and $R^{51}$, and a trimethylsilyl group or tert-butyldimethylsilyl group is preferable as the hydrolyzable group, with a trimethylsilyl group being particularly preferable.

Compounds represented by the following General Formulas (X) to (XIII) are also preferable as the hydrocarbyloxy silane compound represented by General Formula (II).

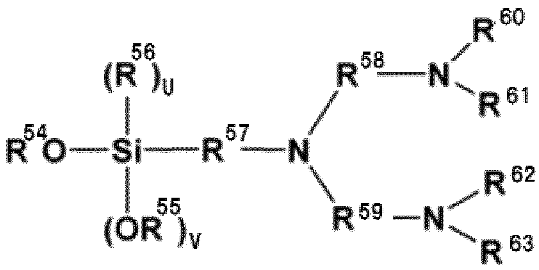

··· (X)

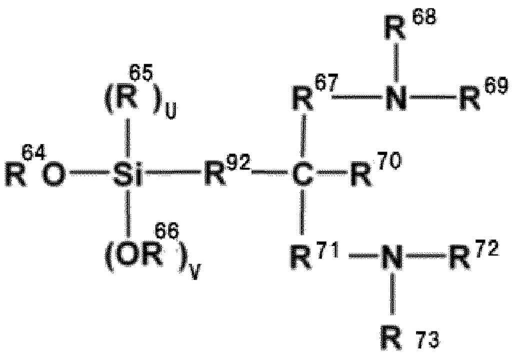

··· (XI)

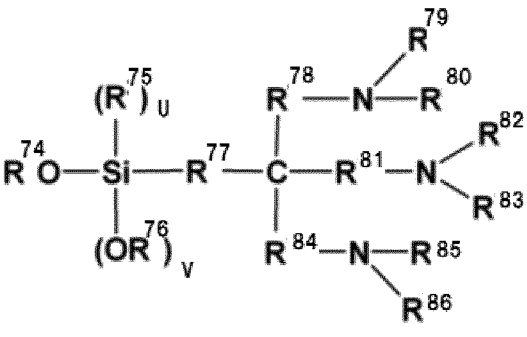

··· (XII)

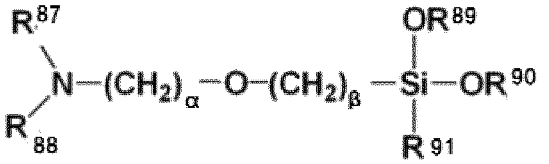

... (XIII)

In Formulas (X) to (XIII), the symbols U and V each represent integers from 0 to 2 and satisfy the relationship U + V = 2. The $R^{54-92}$ in General Formulas (X) to (XIII) may be the same or different and each represent a $C_{1-20}$ monovalent or divalent aliphatic or cycloaliphatic hydrocarbon group or a $C_{6-18}$ monovalent or divalent aromatic hydrocarbon group. In General Formula (XIII), $\alpha$ and $\beta$ represent integers from 0 to 5.

A lithium amide compound is preferable as the polymerization initiator having a modified functional group. Examples of the lithium amide compound include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium N-methylpiperazide, lithium ethylpropylamide, lithium ethylbutylamide, lithium ethylbenzylamide, lithium methylphenethylamide, and the like.

In addition to the above-described natural rubber (A1) and modified diene rubber (A2) having a glass transition temperature (Tg) of -50°C or lower, the rubber component (A) may include another rubber component. Examples of the other rubber component include unmodified synthetic diene rubber, such as synthetic isoprene rubber (IR), polybutadiene rubber (BR), styrene-butadiene copolymer rubber (SBR), and styrene-isoprene copolymer rubber (SIR) that are unmodified; and modified diene rubber with a glass transition temperature (Tg) exceeding -50°C.

The rubber composition of the present disclosure includes the thermoplastic resin (B). The addition of the thermoplastic resin (B) to the rubber composition can increase the elastic modulus in the low-strain region while decreasing the elastic modulus in the high-strain region. Therefore, using the rubber composition that includes the thermoplastic resin (B) in the tread of a tire can ensure the rigidity necessary for steering stability during driving while increasing the deformation volume of the tread rubber near the contact patch with the road surface, where strain is large during driving. Consequently, the friction coefficient ($\mu$) on wet road surfaces increases, which can increase the wet performance of the tire.

The amount of the thermoplastic resin (B) is 10 to 50 parts by mass per 100 parts by mass of the rubber component (A), preferably 12.5 parts by mass or more, and is preferably 40 parts by mass or less, more preferably 30 parts by mass or less. When the amount of the thermoplastic resin (B) is 10 parts by mass or more per 100 parts by mass of the rubber component (A), the elastic modulus of the rubber composition in the high strain region can be reduced, and when the amount is 50 parts by mass or less, a reduction of the elastic modulus of the rubber composition in the low strain region can be suppressed. Accordingly, setting the amount of the thermoplastic resin (B) to 10 to 50 parts by mass per 100 parts by mass of the rubber component (A) can further improve the wet performance of the tire.

Examples of the thermoplastic resin (B) include $C_5$-based resins, $C_9$-based resins, $C_5/C_9$-based resins, dicyclopentadiene resins, rosin resins, alkyl phenolic resins, and terpene phenolic resins. Among these, $C_5/C_9$-based resins, $C_5$-based resins, $C_9$-based resins, and dicyclopentadiene resins are preferable, and $C_5/C_9$-based resins are particularly preferable. $C_5/C_9$-based resins, $C_5$-based resins, $C_9$-based resins, and dicyclopentadiene resins are highly compatible with the natural rubber (A1) and can further increase the effect of raising the elastic modulus of the rubber composition in the low-strain region and the effect of lowering the elastic modulus of the rubber composition in the high-strain region, thereby further improving the wet performance of the tire. One kind of the thermoplastic resin (B) may be used alone, or two or more kinds may be used in combination.

The $C_5/C_9$-based resins refer to $C_5/C_9$-based synthetic petroleum resins. Examples of these $C_5/C_9$-based resins include solid polymers obtained by polymerizing a petroleum-derived $C_5$ fraction and $C_9$ fraction using a Friedel-Crafts catalyst such as $AlCl_3$ or $BF_3$. Specific examples include a copolymer having, as main components, styrene, vinyltoluene, $\alpha$-methylstyrene, indene, and the like. As the $C_5/C_9$-based resin, a resin with little $C_9$ or higher component is preferable in terms of compatibility with the rubber component (A). Here, including "little $C_9$ or higher component" means that the amount of $C_9$ or higher component in the total amount of the resin is less than 50 mass%, preferably 40 mass% or less. Commercial products may be used as the $C_5/C_9$-based resin, such as "Quintone® G100B" (produced by Zeon Corporation) (Quintone is a registered trademark in Japan, other countries, or both), "ECR213" (produced by ExxonMobil Chemical Company), "T-REZ RD104" (produced by Tonen Chemical Corporation), and the like.

The $C_5$-based resins refer to $C_5$-based synthetic petroleum resins. Examples of $C_5$-based resins include aliphatic petroleum resins obtained by using a Friedel-Crafts catalyst such as $AlCl_3$ or $BF_3$ to polymerize a $C_5$ fraction obtained by pyrolysis of naphtha in the petrochemical industry. The $C_5$ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. Commercial products

may be used as the $C_5$-based resins, such as the "Escorez® 1000 series", which are aliphatic petroleum resins produced by ExxonMobil Chemical Company (Escorez is a registered trademark in Japan, other countries, or both); "A100, B170, M100, R100" in the "Quintone® 100 series", which are aliphatic petroleum resins produced by Zeon Corporation; "T-REZ RA100" produced by Tonen Chemical Corporation; and the like.

The $C_9$-based resins are, for example, resins resulting from polymerization of a $C_9$ aromatic group that has, as the principal monomers, vinyl toluene, alkyl styrene, and indene, which are $C_9$ fraction by-products produced along with petrochemical raw materials, such as ethylene or propylene, by pyrolysis of naphtha in the petrochemical industry. Specific examples of $C_9$ fractions obtained by pyrolysis of naphtha include vinyltoluene, $\alpha$-methylstyrene, $\beta$-methylstyrene, $\gamma$-methylstyrene, o-methylstyrene, p-methylstyrene, and indene. Along with a $C_9$ fraction, the $C_9$-based resin may use a $C_8$ fraction, such as styrene, a $C_{10}$ fraction, such as methylindene or 1,3-dimethylstyrene, and other substances such as naphthalene, vinylnaphthalene, vinylanthracene, or p-tert-butylstyrene as raw materials. These $C_8$-$C_{10}$ fractions and the like may simply be mixed or may be co-polymerized using a Friedel-Crafts catalyst, for example. The $C_9$-based resin may be a modified petroleum resin modified by a compound including a hydroxyl group, an unsaturated carboxylic acid compound, or the like. Commercial products may be used as the $C_9$-based resins. Examples of an unmodified $C_9$-based petroleum resin include "Nisseki Neopolymer® L-90", "Nisseki Neopolymer® 120", "Nisseki Neopolymer® 130", "Nisseki Neopolymer® 140" (produced by JX Nippon Oil & Energy Corporation) (Neopolymer is a registered trademark in Japan, other countries, or both), and the like.

The dicyclopentadiene resin (DCPD resin) is a petroleum resin manufactured using dicyclopentadiene, which is obtainable by dimerization of cyclopentadiene, as the main raw material. Commercial products may be used as the dicyclopentadiene resin. Examples include "1105, 1325, 1340" in the "Quintone® 1000 series", which are alicyclic petroleum resins produced by Zeon Corporation.

The rubber composition of the present disclosure includes a silica (C) such that the specific surface area by cetyltrimethylammonium bromide adsorption (CTAB) ($m^2/g$) and the ink bottle-shaped micropore index (IB) satisfy Expression (Y) above.

In Expression (Y), the specific surface area by cetyltrimethylammonium bromide adsorption (CTAB) ($m^2/g$) represents a value measured according to ASTM D3765-92. It should be noted, however, that ASTM D3765-92 is a method for measuring CTAB of carbon black. Therefore, in the present disclosure, CTAB is calculated by preparing a separate cetyltrimethylammonium bromide (CE-TRAB) standard solution in place of IRB#3 (83.0 $m^2/g$) as the standard, carrying out standardization of silica OT (sodium di-2-ethylhexyl sulfosuccinate) solution using the CE-TRAB standard solution; assuming that the cross-sectional area per one CE-TRAB molecule adsorbed on the silica surface is 0.35 $nm^2$; and taking the specific surface area ($m^2/g$) calculated from the amount of CE-TRAB adsorption to be the CTAB value. This approach is used because the amount of CE-TRAB adsorption on the same surface area is thought to differ between carbon black and silica, as these have different surface characteristics.

The ink bottle-shaped micropore index (IB) in Expression (Y) is calculated by Expression (Z),

$$IB = M2 - M1 \cdots (Z)$$

where in a measurement, according to a mercury press-in method using a mercury porosimeter, of silica including micropores having openings with diameters in a range of $1.2 \times 10^5$ nm to 6 nm on the outer surface of the silica, M1 represents the diameter (nm) of the opening exhibiting the maximum mercury charge rate when pressure is raised from 1 PSI to 32000 PSI, and M2 represents the diameter (nm) of the opening exhibiting the maximum mercury discharge rate when pressure is lowered from 32000 PSI to 1 PSI. Measurement according to a mercury press-in method using a mercury porosimeter is useful for being simpler and easier than measurement using an electron microscope, which was often employed in the prior art for evaluation of micropore morphology, and also for yielding excellent quantitative results.

In general, particles of silica each have a number of micropores as recessed portions with openings at the outer surface of the particle. FIG. 1 is a schematic view of configurations of such micropores in a cross-section in the inner core direction of a particle of silica. Micropores seen as recessed portions in a cross-section in the inner core direction of a silica particle have various shapes. For example, a type A micropore has a configuration in which a diameter $M_a$ of an opening on the outer surface of the particle is substantially equal to the micropore diameter inside the particle (inner diameter) $R_a$, i.e. a substantially cylindrical configuration in a cross-section in the inner core direction of the particle. On the other hand, a type B micropore has a configuration in which a diameter $M_b$ of an opening on the outer surface of the particle is smaller than the micropore diameter inside the particle (inner diameter) $R_b$, i.e. an ink bottle-shaped configuration in a cross-section in the inner core direction of the particle. In the case of a type B micropore having an ink bottle-shaped configuration in a cross-section in the inner core direction of the particle, rubber molecular chains do not smoothly enter the micropore from the outer surface toward the interior of the particle. Rubber molecular chains thus fail to adsorb

to the silica sufficiently when the silica is blended with a rubber component. The value of tanδ may increase, and the reinforcing effect may become insufficient, which may make it difficult to improve the steering stability of the tire. Accordingly, by decreasing the number of ink bottle-shaped type B micropores and increasing the number of type A micropores that are substantially cylindrical in an inner core direction cross-section of the particle, the entry of rubber molecular chains can be efficiently facilitated, and a sufficient reinforcing effect can be achieved without increasing tanδ, thereby contributing to improvement of the steering stability of a tire.

In view of this, the aforementioned "ink bottle-shaped micropore index" (IB) is prescribed in the present disclosure to decrease the number of type B micropores that are ink bottle-shaped in an inner core direction cross-section of the particles of silica blended into the rubber component. When pressure is increased in the measurement using a mercury porosimeter according to a mercury press-in method described above, mercury is relatively easily charged into the inner portion of the substantially cylindrical type A micropore, because this micropore has a wide opening on the outer surface of the particle. Conversely, mercury is less easily charged into the inner portion of the ink bottle-shaped type B micropore, because the opening thereof on the outer surface is narrower. For the same reasons, when pressure is decreased, mercury is relatively easily discharged from the inner portion of the substantially cylindrical type A micropore to the outside of the micropore, whereas mercury hardly discharges from the inner portion of the ink bottle-shaped type B micropore to the outside of the micropore.

Accordingly, hysteresis occurs between the mercury charge and discharge curves C, D during measurement according to a mercury press-in method using a mercury porosimeter, as illustrated in FIG. 2. Specifically, mercury is gradually charged into substantially cylindrical type A micropores at relatively low pressure. When the pressure rises to a certain value, the mercury rushes into micropores other than substantially cylindrical micropores, such as ink bottle-shaped type B micropores, which had tended not to be charged by mercury until that time. The charge rate thus rapidly increases, yielding the mercury charge curve C, where the vertical axis represents the differential mercury charge rate (-dV/d(log d)), and the horizontal axis represents the diameter M (nm) of an opening of a micropore of silica. On the other hand, when pressure is decreased after having been sufficiently increased, the state where mercury is not easily discharged under relatively high pressure is maintained at first. When the pressure drops to a certain value, the mercury charged in the micropores rushes out of the micropores. The discharge rate thus rapidly increases, yielding the mercury discharge curve D, where the vertical axis represents the differential mercury discharge rate (-dV/d(log d)), and the horizontal axis represents the diameter M (nm) of an opening of a micropore of silica. Mercury charged into micropores tends to remain in a state where it is not easily discharged when pressure decreases. Therefore, when pressure decreases, an increase in the discharge amount is observed at the position of a larger diameter (M2) than the diameter (M1) that exhibits a large charge amount when the pressure increases. The difference between these diameters (M2 - M1) corresponds to IB in FIG. 2. The tendency of charged mercury not to discharge easily is particularly conspicuous in ink bottle-shaped type B micropores. Although mercury charges into type B micropores when the pressure increases, mercury hardly discharges from the type B micropores when the pressure decreases.

Using the mercury charge and discharge curves C, D plotted on the basis of characteristics of micropores measured with the above measurement method, the difference IB between diameter M1 (nm) and diameter M2 (nm), calculated in accordance with Expression (Z), appears to represent the difference (length: nm) between these diameters, but substantially represents a micropore index indicating the presence ratio of ink bottle-shaped type B micropores in silica where, in a measurement according to a mercury press-in method using a mercury porosimeter, M1 represents the diameter (nm) of an opening exhibiting the maximum mercury charge rate when pressure is raised from 1 PSI to 32000 PSI, and M2 represents the diameter (nm) of an opening exhibiting the maximum mercury discharge rate when pressure is lowered from 32000 PSI to 1 PSI. Specifically, a smaller presence ratio of ink bottle-shaped type B micropores with sufficiently narrow openings results in the mercury charge rate and the mercury discharge rate becoming nearly equal, which yields a smaller IB value due to a reduction in the difference between the diameter (M1) of the opening exhibiting the maximum mercury charge rate and the diameter (M2) of the opening exhibiting the maximum mercury discharge rate. Conversely, a larger presence ratio of ink bottle-shaped type B micropores results in the mercury discharge rate decreasing more than the mercury charge rate, which yields a larger IB value due to an increase in the difference between the diameter (M1) of the opening exhibiting the maximum mercury charge rate and the diameter (M2) of the opening exhibiting the maximum mercury discharge rate.

The above-described IB can characteristically vary in accordance with the aforementioned CTAB value. IB tends to decrease as CTAB increases. Accordingly, the silica (C) used in the present disclosure needs to satisfy Expression (Y).

$$IB \leq -0.36 \times CTAB + 86.8 \cdots (Y)$$

Silica for which IB and CTAB satisfy Expression (Y) has an effectively reduced number of ink bottle-shaped type B

micropores with narrow openings and a large presence ratio of substantially cylindrical type A micropores. Therefore, rubber molecular chains can sufficiently enter and adsorb to micropores to achieve a sufficient reinforcing effect, which can improve steering stability without increasing the rolling resistance of a tire.

The specific surface area by cetyltrimethylammonium bromide adsorption (CTAB) of the silica (C) is preferably 150 $m^2/g$ or more, more preferably 150 $m^2/g$ to 300 $m^2/g$, even more preferably 150 $m^2/g$ to 250 $m^2/g$, and particularly preferably 150 $m^2/g$ to 220 $m^2/g$. When CTAB is 150 $m^2/g$ or more, the storage modulus of the rubber composition can be improved further, and the steering stability of a tire in which the rubber composition is used can be improved further. When CTAB is 300 $m^2/g$ or less, the silica (C) can be dispersed well in the rubber component (A), improving the processability of the rubber composition.

The amount of the silica (C) is preferably in a range of 50 to 75 parts by mass per 100 parts by mass of the rubber component (A). When the amount of the silica (C) is 50 parts by mass or more per 100 parts by mass of the rubber component (A), the storage modulus of the rubber composition can be further improved, and the steering stability of a tire in which the rubber composition is used can be further improved. When the amount is 75 parts by mass or less, the processability of the rubber composition is good.

Besides the above-described silica (C), the rubber composition of the present disclosure may include another silica, or carbon black, aluminum hydroxide, alumina, clay, calcium carbonate, or the like, as the filler. Among these fillers, carbon black is preferable. The carbon black may, for example, be GPF, FEF, HAF, ISAF, or SAF grade carbon black. Among these, ISAF and SAF grade carbon black are preferable for improving the wet performance of the tire. One kind of these carbon blacks may be used alone, or two or more kinds may be used in combination. The ratio of carbon black in the filler is preferably 50 mass% or less, more preferably 30 mass% or less, and even more preferably 5 mass% to 10 mass%. The rigidity of the rubber composition improves by carbon black being added.

The proportion of silica among the total amount of carbon black and silica (silica/(carbon black + silica)) is preferably 90 mass% or more.

The total amount of carbon black and silica (carbon black + silica) is preferably in a range of 55 to 100 parts by mass per 100 parts by mass of the rubber component (A), more preferably a range of 57 to 85 parts by mass.

The amount of the filler in the rubber composition of the present disclosure per 100 parts by mass of the rubber component (A) is preferably 30 parts by mass or more, more preferably 40 parts by mass or more, and is preferably 100 parts by mass or less, more preferably 80 parts by mass or less. When the amount of the filler in the rubber composition is 30 parts by mass or more, use of the rubber composition in the tread rubber of a tire can further decrease the rolling resistance of the tire while further increasing the wet performance. When the amount of the filler is 100 parts by mass or less, the processability of the rubber composition is good.

To improve the effect of adding the silica, a silane coupling agent is preferably further included in the rubber composition of the present disclosure. Any silane coupling agent may be added. Examples include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. One kind of these silane coupling agents may be used alone, or two or more kinds may be used in combination.

The amount of the silane coupling agent is preferably in a range of 2 to 20 parts by mass per 100 parts by mass of the silica, more preferably a range of 5 to 15 parts by mass. When the amount of the silane coupling agent is 2 parts by mass or more per 100 parts by mass of the silica, the effect of adding the silica is sufficiently improved. When the amount of the silane coupling agent is 20 parts by mass or less per 100 parts by mass of the silica, gelation of the rubber component (A) is unlikely.

The rubber composition of the present disclosure may further include a softener for the sake of processability and operability. The amount of the softener is preferably in a range of 1 to 5 parts by mass per 100 parts by mass of the rubber component (A), more preferably a range of 1.5 to 3 parts by mass. Adding 1 part by mass or more of the softener facilitates kneading of the rubber composition, whereas adding 5 parts by mass or less of the softener can suppress a reduction in the rigidity of the rubber composition.

Examples of the softener include mineral-derived oil, petroleum-derived aromatic oil, paraffin oil, naphthene oil, and palm oil derived from natural products. Among these, a mineral-derived softener and a petroleum-derived softener are preferable from the standpoint of the wet performance of the tire.

The rubber composition of the present disclosure may further include a fatty acid metal salt. Examples of the metal used in the fatty acid metal salt include Zn, K, Ca, Na, Mg, Co, Ni, Ba, Fe, Al, Cu, and Mn. Of these, Zn is preferable. Examples of the fatty acid used in the fatty acid metal salt include $C_{4-30}$ saturated or unsaturated fatty acids having a

straight-chain, branched, or cyclic structure, and mixtures thereof. Of these, $C_{10-22}$ saturated or unsaturated straight-chain fatty acids are preferable. Examples of $C_{10-22}$ saturated straight-chain fatty acids include lauric acid, myristic acid, palmitic acid, and stearic acid. Examples of $C_{10-22}$ unsaturated straight-chain fatty acids include oleic acid, linoleic acid, linolenic acid, and arachidonic acid. One kind of fatty acid metal salt may be used alone, or two or more kinds may be used in combination. The content of the fatty acid metal salt is preferably in a range of 0.1 to 10 parts by mass and more preferably in a range of 0.5 to 5 parts by mass per 100 parts by mass of the rubber component (A).

In addition to the rubber component (A), the thermoplastic resin (B), a filler such as the silica (C), a silane coupling agent, a softener, and a fatty acid metal salt, the rubber composition of the present disclosure may also include compounding agents typically used in the rubber industry. For example, stearic acid, an age resistor, zinc oxide (zinc white), a vulcanization accelerator, a vulcanizing agent, or the like may be appropriately selected and added in a range that does not impede the object of the present disclosure. Commercial products may be suitably used as these compounding agents.

The storage modulus of the rubber composition of the present disclosure at 0°C under 4% strain ($E'_{0°C, 4\%}$) is preferably 16.7 MPa or less, more preferably 13.8 MPa or less, still more preferably 11.5 MPa or less, still more preferably 11.0 MPa or less, still more preferably 10.5 MPa or less, still more preferably 8.7 MPa or less, still more preferably 8.0 MPa or less, particularly preferably 7.5 MPa or less, and is preferably 3.5 MPa or more, more preferably 4.0 MPa or more. When the storage modulus at 0°C under 4% strain ($E'_{0°C, 4\%}$) is 16.7 MPa or less, use of the rubber composition in the tread of a tire can further improve the wet performance of the tire.

In the rubber composition of the present disclosure, tanδ at 0°C is preferably 0.7 or less, more preferably 0.6 or less, and even more preferably 0.5 or less.

The storage modulus of the rubber composition of the present disclosure at 30°C under 1% strain ($E'_{30°C, 1\%}$) is preferably 4.5 MPa or more, more preferably 5.0 MPa or more, even more preferably 5.5 MPa or more, and is preferably 7.0 MPa or less, more preferably 6.5 MPa or less. When the storage modulus at 30°C under 1% strain ($E'_{30°C, 1\%}$) is 4.5 MPa or more, use of the rubber composition in the tread of a tire can further improve the steering stability of the tire.

The rubber composition of the present disclosure is preferably produced through a process of kneading the rubber component (A), the thermoplastic resin (B), and the silica (C), excluding a vulcanization system compounding agent that includes a vulcanizing agent and a vulcanization accelerator, at 150°C to 165°C.

Kneading at 150°C to 165°C while excluding the vulcanization system compounding agent can disperse compounding agents other than the vulcanization system compounding agent in the rubber component (A) uniformly while avoiding premature vulcanization (scorching). This allows the effects of each compounding agent to be sufficiently achieved and can increase the storage modulus of the rubber composition at 30°C under 1% strain ($E'_{30°C, 1\%}$) while reducing the storage modulus of the rubber composition at 0°C under 4% strain ($E'_{0°C, 4\%}$).

The storage modulus (E') of the rubber composition can be changed by adjusting not only the above-described kneading temperature, but also the type and blend ratio of the rubber component (A), the type and amount of the thermoplastic resin (B), the properties and amount of the silica (C), and the like, and also the type and amount of other compounding agents.

After being kneaded at 150°C to 165°C, the rubber composition is preferably further kneaded at another temperature less than 150°C, with the addition of a vulcanization system compounding agent. A vulcanization system compounding agent that includes a vulcanizing agent and a vulcanization accelerator is preferably added after the compounding agents other than the vulcanization system compounding agent are sufficiently dispersed in the rubber component (A), and the rubber composition is then preferably kneaded at a temperature that can prevent premature vulcanization (scorching), such as 90°C to 120°C.

The kneading time during kneading at each temperature during production of the rubber composition is not restricted and may be set appropriately considering factors such as the size of the kneading device, the volume of the raw material, and the type and state of the raw material.

Examples of the vulcanizing agent include sulfur. The amount of the vulcanizing agent is preferably in a range of 0.1 to 10 parts by mass as sulfur per 100 parts by mass of the rubber component (A), more preferably a range of 1 to 4 parts by mass. When the amount of the vulcanizing agent is 0.1 parts by mass or more as sulfur, the fracture strength, wear resistance, and the like of the vulcanized rubber can be ensured. When this amount is 10 parts by mass or less, the rubber elasticity can be sufficiently ensured. In particular, setting the amount of the vulcanizing agent to 4 parts by mass or less as sulfur can further improve the wet performance of the tire.

Any vulcanization accelerator may be used. Examples include a thiazole type vulcanization accelerator such as 2-mercaptobenzothiazole (MBT), dibenzothiazyl disulfide (MBTS), N-cyclohexyl-2-benzothiazyl sulfenamide (CBS), and N-tert-butyl-2-benzothiazolyl sulfenamide (TBBS); and a guanidine type vulcanization accelerator such as 1,3-diphenyl guanidine (DPG). The rubber composition of the present disclosure preferably includes three types of vulcanization accelerators. The amount of the vulcanization accelerator is preferably in a range of 0.1 to 5 parts by mass per 100 parts by mass of the rubber component (A), more preferably a range of 0.2 to 3 parts by mass.

The rubber composition of the present disclosure may be produced as described above by using a Banbury

mixer, a roll, or the like, for example, to blend and knead the rubber component (A) with the thermoplastic resin (B) and silica (C) and any compounding agents selected as necessary and then subjecting the result to processes such as warming and extrusion.

The rubber composition of the present disclosure can be used in a variety of rubber products, starting with tires. In particular, the rubber composition of the present disclosure is suitable for the tread rubber of a tire.

<Tire>

The tire of the present disclosure uses the aforementioned rubber composition in the tread rubber. Since the aforementioned rubber composition is used in the tread rubber of the tire of the present disclosure, the tire has low rolling resistance, excellent steering stability, and excellent wet performance. The tire of the present disclosure can be used in a variety of vehicles but is preferably a tire for passenger vehicles.

In accordance with the type of tire, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure is preferably a pneumatic tire. The pneumatic tire may be filled with ordinary air or air with an adjusted partial pressure of oxygen, or may also be filled with an inert gas such as nitrogen, argon, or helium.

## EXAMPLES

The present disclosure is described below in detail with reference to Examples. However, the present disclosure is in no way limited to the following Examples.

<Preparation and Evaluation of Rubber Composition>

Rubber compositions were produced using a regular Banbury mixer in accordance with the formulations listed in Tables 1 and 2. The storage modulus (E') and the loss tangent (tanδ) of the resulting rubber compositions were measured with the following method. Tables 1 and 2 list the results.

(1) Storage Modulus (E') and Loss Tangent (tanδ)

The storage modulus at 30°C under 1% strain ($E'_{30°C, 1\%}$), the storage modulus at 0°C under 4% strain ($E'_{0°C, 4\%}$), and the loss tangent at 0°C under 1% strain ($\tan\delta_{0°C, 1\%}$) were measured in the vulcanized rubber obtained by vulcanizing the rubber compositions for 33 minutes at 145°C. Measurements were made under the conditions of an initial load of 160 mg and a frequency of 52 Hz, using a spectrometer produced by Ueshima Seisakusho Co., Ltd.

<Production and Evaluation of Tires>

The rubber compositions obtained as described above were used in tread rubber to produce passenger vehicle pneumatic radial tires having a tire size of 195/65R15. The wet performance (Wet Grip Index), rolling resistance, and steering stability of the tires were evaluated using the following methods. Tables 1 and 2 list the results.

(2) Wet Performance (Wet Grip Index)

In accordance with ISO23671, one sample tire was mounted on a trailer test tire axis, a braking force was applied to the tire axis, the peak μ was measured, and the Wet Grip Index was calculated against a standard tire (the tire of Comparative Example 1). A larger index indicates better wet performance.

(3) Rolling Resistance

Each sample tire was rotated by a rotating drum at a speed of 80 km/hr, a load of 4.82 kN was applied, and the rolling resistance was measured. The rolling resistance is expressed as an index, with the inverse of the rolling resistance for the tire of Comparative Example 1 as 100. A larger index indicates lower rolling resistance.

(4) Steering Stability

The sample tires were mounted on a test vehicle, and the steering stability in an actual vehicle test on a dry road surface was represented as a subjective score by the driver. The steering stability is expressed as an index, with the subjective score for the tire of Comparative Example 1 as 100. A larger index indicates better steering stability.

[Table 1]

| | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Formulation | NR *1 | parts by mass | 50 | 30 | 50 | 30 | 50 | 50 | 50 | 50 |
| | Modified SBR *2 | | 50 | 70 | 50 | 70 | 50 | 50 | 50 | 50 |
| | Silica-1 *3 | | 60 | 60 | 60 | 60 | 60 | 60 | 60 | - |
| | Silica-2 *4 | | - | - | - | - | - | - | - | - |
| | Silica-3 *5 | | - | - | - | - | - | - | - | 75 |
| | Carbon black *6 | | 5 | 5 | 5 | 5 | 5 | 5 | 5 | 5 |
| | Age resistor TMDQ *7 | | 1.5 | 1.5 | 1.5 | 1.5 | 1.5 | 1.5 | 1.5 | 1.5 |
| | Age resistor 6PPD *8 | | 1.5 | 1.5 | 1.5 | 1.5 | 1.5 | 1.5 | 1.5 | 1.5 |
| | $C_5$/$C_9$-based resin *9 | | 15 | 15 | 45 | 45 | - | - | - | 10 |
| | $C_9$-based resin *10 | | - | - | - | - | 15 | - | - | - |
| | DCPD resin *11 | | - | - | - | - | - | 15 | - | - |
| | $C_5$-based resin *12 | | - | - | - | - | - | - | 15 | - |
| | Sulfur *13 | | 1.5 | 1.5 | 1.5 | 1.5 | 1.5 | 1.5 | 1.5 | 1.5 |
| | Vulcanization accelerator *14 | | 2 | 2 | 2 | 2 | 2 | 2 | 2 | 2 |
| | Zinc white *15 | | 2.5 | 2.5 | 2.5 | 2.5 | 2.5 | 2.5 | 2.5 | 2.5 |
| Properties | $E'_{30°C, 1\%}$ | MPa | 6.5 | 7.1 | 5.3 | 5.9 | 7.1 | 6.5 | 5.9 | 5.5 |
| | $E'_{0°C, 4\%}$ | | 10.9 | 10.2 | 8.2 | 6.8 | 11.6 | 11.6 | 10.2 | 8.3 |
| | $\tan\delta_{0°C, 1\%}$ | - | 0.370 | 0.385 | 0.810 | 0.825 | 0.360 | 0.370 | 0.375 | 0.332 |
| Performance | Wet grip index | index | 100 | 105 | 120 | 130 | 95 | 95 | 105 | 100 |
| | Rolling resistance | | 125 | 135 | 115 | 105 | 120 | 120 | 125 | 130 |
| | Steering stability | | 120 | 125 | 110 | 115 | 125 | 120 | 115 | 110 |

[Table 2]

| | | | Comp. Ex. 1 | Comp. Ex. 2 | Comp. Ex. 3 | Comp. Ex. 4 | Comp. Ex. 5 | Ex. 9 | Comp. Ex. 6 | Comp. Ex. 7 |
|---|---|---|---|---|---|---|---|---|---|---|
| Formulation | NR *1 | parts by mass | 100 | 70 | 50 | 50 | 100 | 70 | 50 | 50 |
| | Modified SBR *2 | | - | 30 | 50 | 50 | - | 30 | 50 | 50 |
| | Silica-1 *3 | | - | - | - | - | 60 | 60 | 60 | 60 |
| | Silica-2 *4 | | 60 | 60 | 60 | 60 | - | - | - | - |
| | Silica-3 *5 | | - | - | - | - | - | - | - | - |
| | Carbon black *6 | | 5 | 5 | 5 | 5 | 5 | 5 | 5 | 5 |
| | Age resistor TMDQ *7 | | 1.5 | 1.5 | 1.5 | 1.5 | 1.5 | 1.5 | 1.5 | 1.5 |
| | Age resistor 6PPD *8 | | 1.5 | 1.5 | 1.5 | 1.5 | 1.5 | 1.5 | 1.5 | 1.5 |
| | $C_5/C_9$-based resin *9 | | 15 | 15 | 5 | 60 | 15 | 15 | 5 | 60 |
| | $C_9$-based resin *10 | | - | - | - | - | - | - | - | - |
| | DCPD resin *11 | | - | - | - | - | - | - | - | - |
| | $C_5$-based resin *12 | | - | - | - | - | - | - | - | - |
| | Sulfur *13 | | 1.5 | 1.5 | 1.5 | 1.5 | 1.5 | 1.5 | 1.5 | 1.5 |
| | Vulcanization accelerator *14 | | 2 | 2 | 2 | 2 | 2 | 2 | 2 | 2 |
| | Zinc white *15 | | 2.5 | 2.5 | 2.5 | 2.5 | 2.5 | 2.5 | 2.5 | 2.5 |
| Properties | $E'_{30°C, 1\%}$ | MPa | 4.0 | 4.6 | 5.3 | 3.4 | 5.3 | 5.9 | 5.9 | 4.0 |
| | $E'_{0°C, 4\%}$ | | 10.9 | 10.2 | 12.2 | 5.4 | 11.6 | 10.9 | 12.2 | 6.1 |
| | $\tan\delta_{0°C, 1\%}$ | - | 0.330 | 0.345 | 0.205 | 0.960 | 0.335 | 0.350 | 0.210 | 0.965 |

(continued)

| | | | Comp. Ex. 1 | Comp. Ex. 2 | Comp. Ex. 3 | Comp. Ex. 4 | Comp. Ex. 5 | Ex. 9 | Comp. Ex. 6 | Comp. Ex. 7 |
|---|---|---|---|---|---|---|---|---|---|---|
| Performance | Wet grip index | index | 100 | 105 | 90 | 140 | 95 | 100 | 90 | 135 |
| | Rolling resistance | | 100 | 110 | 135 | 100 | 95 | 105 | 130 | 95 |
| | Steering stability | | 100 | 105 | 110 | 95 | 110 | 115 | 115 | 100 |

*1 NR: natural rubber, "SIR20", produced in Indonesia
*2 modified SBR: modified styrene-butadiene copolymer rubber produced by the method below using N,N-bis(trimethylsilyl)-3-[diethoxy(methyl)silyl]propylamine as a modifying agent, Tg = -60°C
*3 silica-1: silica synthesized by the method below, CTAB = 180 $m^2/g$, -0.36 × CTAB + 86.8 = 22.0, IB = 20.0
*4 silica-2: "Nipsi1 AQ" produced by Tosoh Silica Corporation, CTAB = 165 $m^2/g$, -0.36 × CTAB + 86.8 = 27.4, IB = 34.1
*5 silica-3: silica synthesized by the method below, CTAB = 79 $m^2/g$, -0.36 × CTAB + 86.8 = 58.0, IB = 55.0
*6 carbon black: "Asahi #78" produced by Asahi Carbon Co., Ltd.
*7 age resistor TMDQ: "NONFLEX RD-S" produced by Seiko-Chemical Co., Ltd.
*8 age resistor 6PPD: "Antigen 6C" produced by Sumitomo Chemical Co., Ltd.
*9 $C_5/C_9$-based resin: "T-REZ RD104" produced by Tonen Chemical Corporation
*10 $C_9$-based resin: "Nisseki Neopolymer® 140" produced by JX Nippon Oil & Energy Corporation
*11 DCPD resin: dicyclopentadiene resin, "Quintone® 1105" produced by Zeon Corporation
*12 $C_5$-based resin: "T-REZ RA100" produced by Tonen Chemical Corporation
*13 sulfur: "HK200-5" produced by Hosoi Chemical Industry Co., Ltd.
*14 vulcanization accelerator: "Sanceler CM-G" produced by Sanshin Chemical Industry Co., Ltd.
*15 zinc white: zinc oxide produced by Hakusui Tech Co., Ltd.

<Production Method of Modified SBR>

In an 800 mL pressure-resistant glass vessel that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl]propylamine was added as a modifying agent to the polymerization reaction system when the polymerization conversion ratio reached nearly 100%, and a denaturation reaction was carried out for 30 minutes at 50°C. Subsequently, the reaction was stopped by adding 2 mL of an isopropanol solution containing 5 mass% of 2,6-di-t-butyl-p-cresol (BHT), and the result was dried with a regular method to obtain a modified styrene-butadiene copolymer rubber.

<Production Method of Silica-1>

First, 89 L of water and 1.70 L of sodium silicate aqueous solution ($SiO_2$: 160 g/L, molar ratio of $SiO_2/Na_2O$: 3.3) were charged into a jacketed stainless reaction vessel (180 L) provided with a stirrer. The solution was then heated to 75°C. The $Na_2O$ concentration of the resulting solution was 0.015 mol/L.

The same sodium silicate aqueous solution as described above and sulfuric acid (18 mol/L) were simultaneously added dropwise to the solution at flow rates of 520 mL/minute and 23 mL/minute, respectively, while the temperature of the solution was maintained at 75°C. Neutralization was carried out while maintaining the $Na_2O$ concentration in the reaction solution in the range of 0.005 mol/L to 0.035 mol/L by adjusting the flow rates. The reaction solution began to grow cloudy during the reaction. After 45 minutes, the viscosity increased, yielding a gel-like solution. Addition of the sodium silicate aqueous solution and sulfuric acid was continued, and the reaction was stopped after 100 minutes. The silica concentration of the resulting solution was 60 g/L. The same sulfuric acid as above was again added until the pH of the solution reached 3, yielding a silicate slurry. This silicate slurry was filtrated by a filter press and then rinsed with water to yield a wet cake. The wet cake was rendered into a slurry again using an emulsifier and dried with a spray dryer to yield the silica-1.

<Production Method of Silica-3>

First, 65 L of water and 1.25 L of sodium silicate aqueous solution ($SiO_2$: 160 g/L, molar ratio of $SiO_2/Na_2O$: 3.3) were charged into a jacketed stainless reaction vessel (180 L) provided with a stirrer. The solution was then heated to 96°C. The $Na_2O$ concentration of the resulting solution was 0.015 mol/L.

The same sodium silicate aqueous solution as described above and sulfuric acid (18 mol/L) were simultaneously added dropwise to the solution at flow rates of 750 mL/minute and 33 mL/minute, respectively, while the temperature of the solution was maintained at 96°C. Neutralization was carried out while maintaining the $Na_2O$ concentration in the reaction solution in the range of 0.005 mol/L to 0.035 mol/L by adjusting the flow rates. The reaction solution began to grow cloudy during the reaction. After 30 minutes, the viscosity increased, yielding a gel-like solution. Addition of the sodium silicate aqueous solution and sulfuric acid was continued, and the reaction was stopped after 100 minutes. The silica concentration of the resulting solution was 85 g/L. The same sulfuric acid as above was again added until the pH of the solution reached 3, yielding a silicate slurry. This silicate slurry was filtrated by a filter press and then rinsed with water to yield a wet cake. The wet cake was rendered into a slurry again using an emulsifier and dried with a spray dryer to yield the silica-3.

The physical properties of the resulting silica-1 and silica-3 were evaluated by the method below. The physical properties of the aforementioned silica-2 were similarly evaluated.

(5) Measurement of Ink Bottle-Shaped Micropore Index (IB)

According to a mercury press-in method, as described above, a mercury porosimeter POREMASTER-33 (produced by Quantachrome) was used first to raise the pressure from 1 PSI to 32000 PSI and measure the mercury charge rate for micropores with openings in a range of $1.2 \times 10^5$ nm to 6 nm on the outer surface of silica. The diameter (M1) at the position with the peak charge rate, as illustrated in FIG. 2, was determined. Next, the pressure was reduced from 32000 PSI to 1 PSI to discharge mercury from the micropores. The diameter (M2) at the position of the peak discharge rate on the resulting discharge curve was determined. IB was then calculated from M1 and M2 using Expression (Z).

(6) Measurement of CTAB

CTAB was obtained according to the method disclosed in ASTM D3765-92 by preparing a separate cetyltrimethylammonium bromide (CE-TRAB) standard solution in place of IRB#3 (83.0 $m^2$/g), which is the standard for carbon

black measurement; carrying out standardization of silica OT (sodium di-2-ethylhexyl sulfosuccinate) solution using the CE-TRAB standard solution; assuming that the cross-sectional area per one CE-TRAB molecule adsorbed on the silica surface is 0.35 $nm^2$; and calculating the specific surface area ($m^2/g$) from the amount of CE-TRAB adsorption, as described above.

It is clear from Tables 1 and 2 that the tires using the rubber composition of the Examples according to the present disclosure have low rolling resistance, excellent steering stability, and excellent wet performance.

INDUSTRIAL APPLICABILITY

The rubber composition of the present disclosure can be used in the tread rubber of a tire. The tire of the present disclosure can be used in a variety of vehicles.

REFERENCE SIGNS LIST

| | |
|---|---|
| A | Substantially cylindrical micropore |
| B | Ink bottle-shaped micropore |
| $M_a$, $M_b$ | Diameter of opening on outer surface of particle |
| $R_a$, $R_b$ | Micropore diameter inside particle (inner diameter) |
| C | Mercury charge curve |
| D | Mercury discharge curve |

## Claims

**1.** A rubber composition comprising:

a rubber component (A) comprising a natural rubber (A1) and a modified diene rubber (A2) having a glass transition temperature (Tg) of -50°C or lower;
a thermoplastic resin (B); and
a silica (C) such that a specific surface area by cetyltrimethylammonium bromide adsorption (CTAB) ($m^2/g$) and an ink bottle-shaped micropore index (IB) satisfy Expression (Y),

$$IB \leq -0.36 \times CTAB + 86.8 \cdots (Y);$$

wherein the ink bottle-shaped micropore index (IB) in Expression (Y) is calculated by Expression (Z),

$$IB = M2 - M1 \cdots (Z);$$

wherein in Expression (Z), M1 represents a diameter in nanometers of an opening exhibiting a maximum mercury charge rate when pressure is raised from 1 PSI to 32000 PSI in a measurement, according to a mercury press-in method using a mercury porosimeter, of silica including micropores having openings with diameters in a range of $1.2 \times 10^5$ nm to 6 nm on an outer surface of the silica, and M2 represents a diameter in nanometers of an opening exhibiting a maximum mercury discharge rate when pressure is lowered from 32000 PSI to 1 PSI in the measurement; and
wherein an amount of the thermoplastic resin (B) is 10 to 50 parts by mass per 100 parts by mass of the rubber component (A).

**2.** The rubber composition of claim 1, wherein the specific surface area by cetyltrimethylammonium bromide adsorption (CTAB) of the silica (C) is 150 $m^2/g$ or more, and an amount of the silica (C) is 50 to 75 parts by mass per 100 parts by mass of the rubber component (A).

**3.** The rubber composition of claim 1 or 2, wherein the thermoplastic resin (B) is at least one selected from the group consisting of $C_5/C_9$-based resins, $C_5$-based resins, $C_9$-based resins, and dicyclopentadiene resins.

**4.** The rubber composition of any one of claims 1 to 3, wherein a storage modulus at 0°C under 4% strain ($E'_{0°C, 4\%}$) is 16.7 MPa or less.

**5.** A tire comprising a tread rubber in which the rubber composition of any one of claims 1 to 4 is used.

FIG. 1

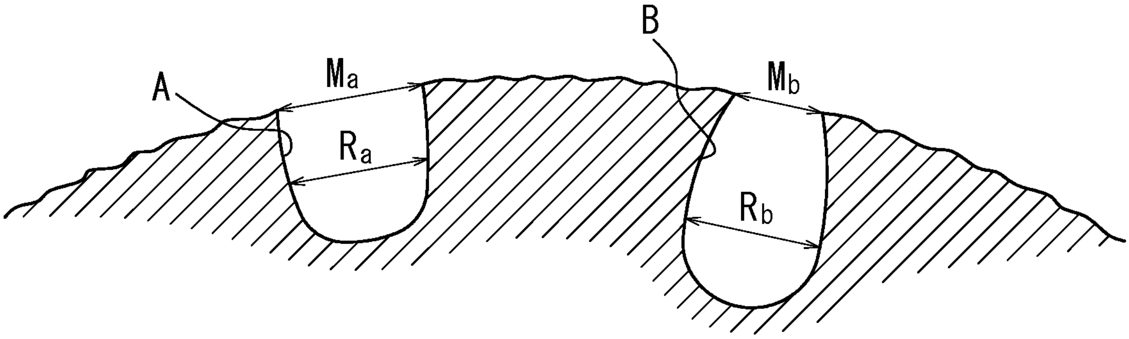

FIG. 2

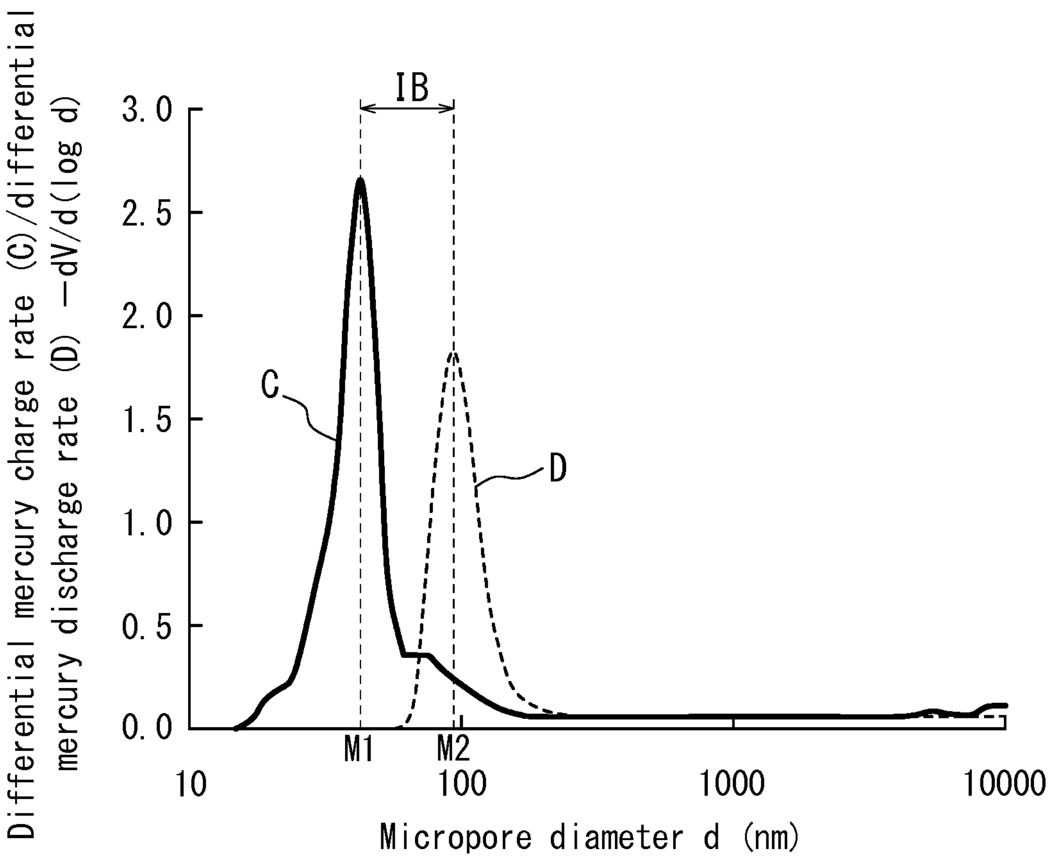
Differential mercury charge rate (C)/differential mercury discharge rate (D) −dV/d(log d)
3.0
2.5
2.0
1.5
1.0
0.5
0.0
IB
C
D
M1
M2
10
100
1000
10000
Micropore diameter d (nm)

**INTERNATIONAL SEARCH REPORT**

International application No.
PCT/JP2017/034174

A. CLASSIFICATION OF SUBJECT MATTER
*C08L15/00*(2006.01)i, *B60C1/00*(2006.01)i, *C08K7/26*(2006.01)i, *C08L7/00*(2006.01)i, *C08L57/02*(2006.01)i, *C08L65/00*(2006.01)i

According to International Patent Classification (IPC) or to both national classification and IPC

B. FIELDS SEARCHED

Minimum documentation searched (classification system followed by classification symbols)
C08L15/00, B60C1/00, C08K7/26, C08L7/00, C08L57/02, C08L65/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-263587 A (Bridgestone Corp.), 12 November 2009 (12.11.2009), claims; paragraphs [0001] to [0006], [0008], [0011], [0075] to [0078], [0081] to [0082], [0091] to [0099] (Family: none) | 1-5 |
| Y | JP 2014-213836 A (Bridgestone Corp.), 17 November 2014 (17.11.2014), claims; paragraphs [0005] to [0007], [0039], [0061] to [0066] (Family: none) | 1-5 |

☒ Further documents are listed in the continuation of Box C.　　☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 23 October 2017 (23.10.17) | 07 November 2017 (07.11.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/034174

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-142108 A (Bridgestone Corp.), 22 July 2013 (22.07.2013), claims; paragraphs [0001] to [0009], [0114], [0121] to [0140] & US 2014/0357804 A1 claims; paragraphs [0001] to [0009], [0148], [0155] to [0168] & EP 2803699 A1 & CN 104039884 A | 1-5 |
| Y | JP 2013-245306 A (Bridgestone Corp.), 09 December 2013 (09.12.2013), claims; paragraphs [0001] to [0011], [0013], [0080] to [0084], [0098] to [0107] (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012092179 A
- JP 2014009324 A